# EUROPEAN PATENT APPLICATION

(11) **EP 4 793 694 A1**
(43) Date of publication of application: **19.08.2026**
(21) Application number: 26155246.7
(22) Date of filing: 30.01.2026
(51) Int. Cl.: G02F 1/1335

(54) **LIQUID CRYSTAL DISPLAY DEVICE AND TIMEPIECE**

(30) Priority: 12.02.2025 JP 2025020469
(71) Applicant: Casio Computer Co., Ltd., Tokyo 151-8543 (JP)
(72) Inventor: Cho, Shinya, Hamura-shi, Tokyo, 205-8555 (JP)
(74) Representative: Grünecker Patent- und Rechtsanwälte PartG mbB

(57) **Abstract**

A liquid crystal display device (1) includes a first transmissive polarizer (10), a second transmissive polarizer (20), a liquid crystal layer (63) disposed between the first transmissive polarizer (10) and the second transmissive polarizer (20), a reflective polarizer (30) disposed on a side of the second transmissive polarizer (20) opposite to a liquid-crystal-layer side closer to the liquid crystal layer (63), and a luminous layer (50) disposed on a side of the reflective polarizer (30) opposite to the liquid-crystal-layer side. A reflection axis (R3) of the reflective polarizer (30) is not parallel to either an absorption axis (A2) or a transmission axis (T2) of the second transmissive polarizer (20) as viewed in a direction (Z) perpendicular to the second transmissive polarizer (20).

## Description

### BACKGROUND OF THE INVENTION

### TECHNICAL FIELD

The present disclosure relates to a liquid crystal display device and a timepiece.

### DESCRIPTION OF RELATED ART

As disclosed in JPH 11-174444 A, there is a known liquid crystal display device in which a luminous layer is arranged on the back side of a liquid crystal panel, so that display is visible in a dark place with light from the luminous layer.

However, in the conventional simple configuration in which a luminous layer is arranged on the back side of a transmissive liquid crystal panel, outside light incident on the liquid crystal panel from the outside is not sufficiently reflected, so that display is dark in a bright place and difficult to see. A possible solution to this problem is to provide a semi-transparent reflector between the liquid crystal panel and the luminous layer. However, because such a semi-transmissive reflector usually has a transmittance set on the assumption of strong light from a backlight, weak light from the luminous layer does not pass through the semi-transmissive reflector, so that display is hardly visible in a dark place. Thus, it is difficult for the conventional technology to obtain sufficient visibility in both the bright place and the dark place while using the luminous layer.

### SUMMARY OF THE INVENTION

A liquid crystal display device according to an aspect of the present disclosure includes:
a first transmissive polarizer;
a second transmissive polarizer;
a liquid crystal layer disposed between the first transmissive polarizer and the second transmissive polarizer;
a reflective polarizer disposed on a side of the second transmissive polarizer opposite to a liquid-crystal-layer side closer to the liquid crystal layer; and
a luminous layer disposed on a side of the reflective polarizer opposite to the liquid-crystal-layer side,
wherein a reflection axis of the reflective polarizer is not parallel to either an absorption axis or a transmission axis of the second transmissive polarizer as viewed in a direction perpendicular to the second transmissive polarizer.

### BRIEF DESCRIPTION OF DRAWINGS

FIG. 1 shows the external appearance of a timepiece of an embodiment.
FIG. 2 is a schematic sectional view of a liquid crystal display device.
FIG. 3 shows a relationship between a transmission axis and an absorption axis of a first transmissive polarizer, a transmission axis and an absorption axis of a second transmissive polarizer, and a transmission axis and a reflection axis of a reflective polarizer.
FIG. 4 shows the principle of display by the liquid crystal display device in a reflection mode.
FIG. 5 shows the principle of display by the liquid crystal display device in a transmission mode.
FIG. 6 shows a relationship between an angle θ shown in FIG. 3 and brightness of display.
FIG. 7 shows the state of light in the reflection mode of a comparative example 1.
FIG. 8 shows the state of light in the transmission mode of a comparative example 2.
FIG. 9 shows visibility in a bright place and a dark place of the embodiment, the comparative example 1 and the comparative example 2.

### DETAILED DESCRIPTION

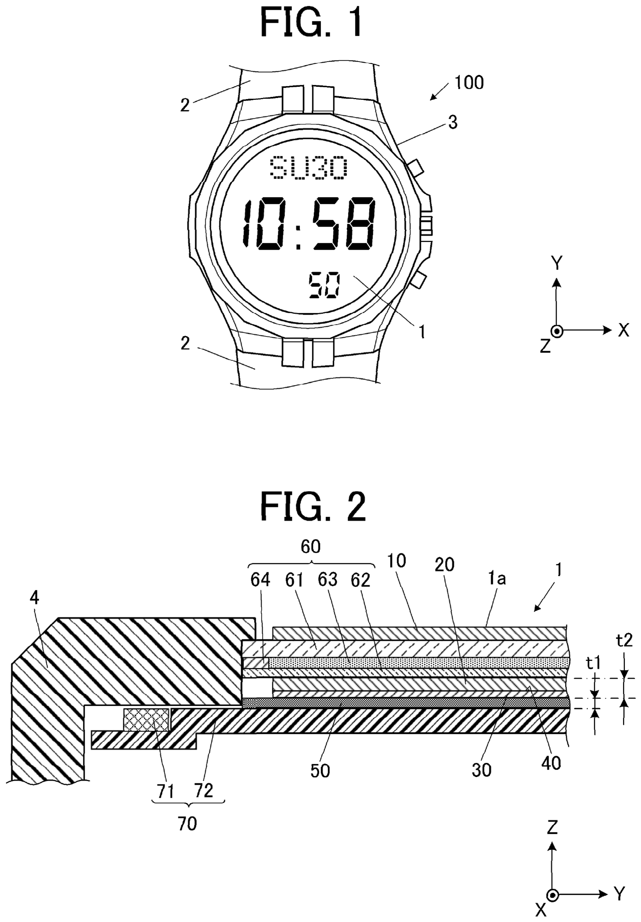

Hereinafter, one or more embodiments of the present disclosure will be described on the basis of the drawings. As shown in FIG. 1, a timepiece 100 of this embodiment includes a case 3 in which, for example, a liquid crystal display device 1 that functions as a display unit is stored, and two bands 2 attached to the case 3. The timepiece 100 is a wristwatch that is used by a user by being worn on a wrist of the user such that the bands 2 are wrapped around the wrist. The liquid crystal display device 1 displays information, such as time, a day of the week and a date, in a digital format. The case 3 has an opening in a surface on a viewing side, and the opening is sealed with a transparent crystal. In the case 3, a housing 4 shown in FIG. 2 is stored. In the housing 4, the liquid crystal display device 1 is stored, and a display surface 1a of the liquid crystal display device 1 is exposed from an opening provided in the housing 4. This display surface 1a is visible via the transparent crystal. Hereinafter, two directions that are parallel to the display surface 1a of the liquid crystal display device 1 and perpendicular to one another are referred to as X direction and Y direction, and a direction that is perpendicular to the X direction and the Y direction and is from the back side of the timepiece 100 (side in contact with the wrist when worn) toward the display surface 1a is referred to as +Z direction. In addition, +X direction is the right direction as viewed from the user facing the liquid crystal display device 1, and +Y direction is the up direction as viewed from the user. Hereinafter, the surface of each component of the timepiece 100 facing in the +Z direction is referred to as an upper surface, and the surface thereof facing in the -Z direction is referred to as a lower surface. The thickness, length and so forth of each component shown in FIG. 2 may be different from the original ones.

As shown in FIG. 2, the liquid crystal display device 1 includes a liquid crystal panel 60. The liquid crystal panel 60 has an upper glass substrate 61 and a lower glass substrate 62, which hereinafter may be collectively referred to as glass substrates 61, 62, arranged to face one another. Between the upper glass substrate 61 and the lower glass substrate 62, liquid crystal is filled, and its surroundings are sealed with a spacer 64. This liquid crystal forms a liquid crystal layer 63. In this embodiment, an orientation control method of liquid crystal molecules in the liquid crystal layer 63 is the twisted nematic (TN) method. Therefore, when no voltage is applied, the liquid crystal molecules in the liquid crystal layer 63 are horizontally oriented with the orientation direction twisted 90 degrees, from the upper glass substrate 61 side to the lower glass substrate 62 side. The liquid crystal layer 63 in this state is optically active, namely, has an optical rotation property, and transmits linearly polarized light incident thereon from one side to the other side while transitioning it to linearly polarized light orthogonal thereto. When a predetermined drive voltage is applied to the liquid crystal layer 63, the liquid crystal molecules in the liquid crystal layer 63 are aligned in an orientation substantially perpendicular to the glass substrates 61, 62, and the twisted state of the orientation direction is resolved. As a result, the optical rotation property of the liquid crystal layer 63 disappears, and therefore when the drive voltage is applied, the light incident on the liquid crystal layer 63 passes through the liquid crystal layer 63 with the polarized state maintained. The facing surface of one of the upper glass substrate 61 and the lower glass substrate 62 is provided with a common electrode, and the facing surface of the other thereof is provided with segment electrodes and pixel electrodes that form a dot matrix. A not-shown drive circuit applies the aforementioned drive voltage to between the common electrode and the segment electrodes and between the common electrode and the pixel electrodes. As the common electrode, the segment electrodes and the pixel electrodes, transparent conductive films of ITO or the like are used. In this embodiment, the thickness of the lower glass substrate 62 is less than that of the upper glass substrate 61 to reduce the overall thickness of the liquid crystal display device 1. In this embodiment, the thickness of the upper glass substrate 61 is 0.4 mm, and the thickness of the lower glass substrate 62 is 0.15 mm, but the thicknesses of the glass substrates 61, 62 are not limited thereto.

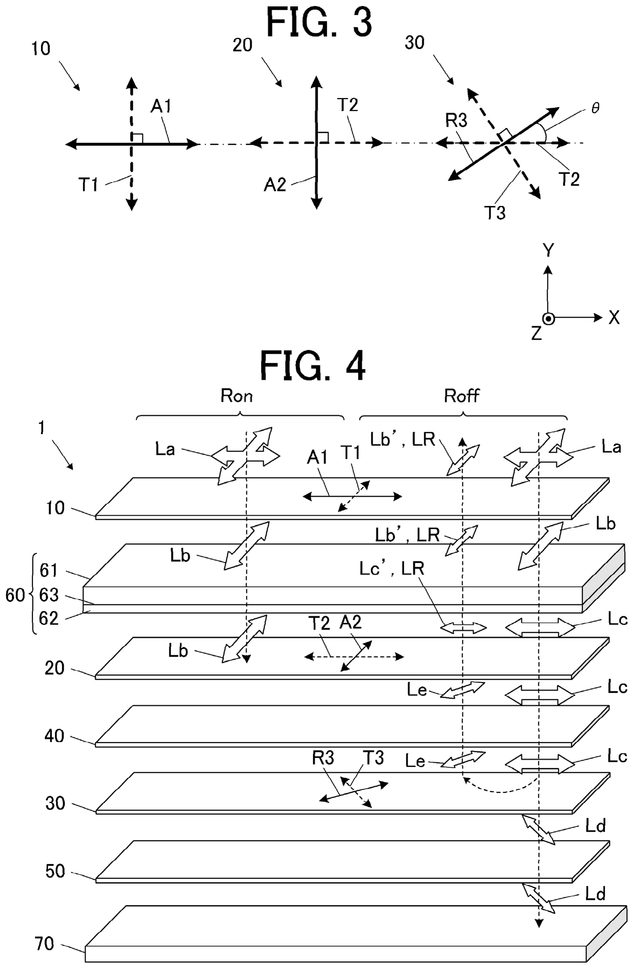

On the upper surface side of the liquid crystal panel 60, a first transmissive polarizer 10 is arranged, and on the lower surface side of the liquid crystal panel 60, a second transmissive polarizer 20 is arranged. Therefore, the liquid crystal layer 63 is arranged between the first transmissive polarizer 10 and the second transmissive polarizer 20. Hereinafter, the first transmissive polarizer 10 and the second transmissive polarizer 20 may be collectively referred to as transmissive polarizers 10, 20. The transmissive polarizers 10, 20 are bonded to the liquid crystal panel 60 via not-shown transparent adhesive layers. The transmissive polarizers 10, 20 each have a transmission axis and an absorption axis orthogonal to one another. Each of the transmissive polarizers 10, 20 transmits, of light incident thereon, light having a polarized component parallel to its transmission axis, and absorbs, of the incident light, light having a polarized component parallel to its absorption axis. Therefore, the light having passed through the transmissive polarizer 10 or 20 is linearly polarized light having a polarized component parallel to its transmission axis. As shown at the left and the center of FIG. 3, in this embodiment, as viewed in a direction (Z direction) perpendicular to the first transmissive polarizer 10 and the second transmissive polarizer 20, the absorption axis (first absorption axis A1) of the first transmissive polarizer 10 and the absorption axis (second absorption axis A2) of the second transmissive polarizer 20 are perpendicular to one another, and the transmission axis (first transmission axis T1) of the first transmissive polarizer 10 and the transmission axis (second transmission axis T2) of the second transmissive polarizer 20 are perpendicular to one another. In FIG. 3, the first absorption axis A1 and the second transmission axis T2 are parallel to the X direction, and the first transmission axis T1 and the second absorption axis A2 are parallel to the Y direction, but they are not limited thereto. In this embodiment, the thickness of each of the transmissive polarizers 10, 20 is 0.21 mm, but not limited thereto.

On the lower surface side of the second transmissive polarizer 20, namely, on a side of the second transmissive polarizer 20 opposite to a liquid-crystal-layer side closer to the liquid crystal layer 63, a reflective polarizer 30 is arranged. The reflective polarizer 30 has a transmission axis (third transmission axis T3) and a reflection axis (reflection axis R3) orthogonal to one another. The reflective polarizer 30 transmits, of the incident light, light having a polarized component parallel to the third transmission axis T3, and reflects, of the incident light, light having a polarized component parallel to the reflection axis R3. Therefore, light having passed through the reflective polarizer 30 is linearly polarized light having a polarized component parallel to the third transmission axis T3, and light having been reflected by the reflective polarizer 30 is linearly polarized light having a polarized component parallel to the reflection axis R3. As the reflective polarizer 30, a film composed of a dielectric multilayer film may be used. Alternatively, as the reflective polarizer 30, a wire grid polarizer in which fine line-shaped members are arranged on a transparent base material may be used. As shown at the right in FIG. 3, an angle formed by the reflection axis R3 of the reflective polarizer 30 and the second transmission axis T2 of the second transmissive polarizer 20 is represented by "θ". At the right in FIG. 3, for comparison, the second transmission axis T2 of the second transmissive polarizer 20 is shown together with the reflection axis R3 and the third transmission axis T3. The angle θ is greater than 0 degrees and less than 90 degrees. In other words, as viewed in the Z direction, the reflection axis R3 and the third transmission axis T3 of the reflective polarizer 30 are both not parallel to either the second absorption axis A2 or the second transmission axis T2 of the second transmissive polarizer 20. It is preferable that the angle θ be greater than 35 degrees and less than 45 degrees. Its reason will be described later. In this embodiment, the angle θ is 37 degrees. Therefore, the third transmission axis T3 forms an angle of 127 degrees (or -53 degrees) with the second transmission axis T2 of the second transmissive polarizer 20. In this embodiment, the thickness of the reflective polarizer 30 is 0.12 mm, but not limited thereto. The reflective polarizer 30 is bonded to the second transmissive polarizer 20 via an adhesive layer 40 that diffuses light. As the adhesive layer 40, for example, an adhesive resin combined with fine particles, such as silica particles, can be used. Alternatively, a sheet (diffuse reflective polarizer) into which the reflective polarizer 30 and the adhesive layer 40 are integrated may be attached to the second transmissive polarizer 20.

On the lower surface side of the reflective polarizer 30, namely, on a side of the reflective polarizer 30 opposite to the liquid-crystal-layer side, a luminous layer 50 is arranged. The luminous layer 50 is a sheet-like material containing a luminous material having a light storage function. The luminous material is a substance that is excited by receiving optical energy in a specific wavelength band (ultraviolet wavelength band mainly) contained in sunlight, various types of illumination light, light from a backlight 70 or the like, and emits light by releasing energy when returning to the ground state from the excited state. Because there is a time lag between when the luminous material becomes the excited state and when it returns to the ground state, the luminous material emits light for a certain period of time even after being placed under a dark environment. Thus, the luminous layer 50 can function as illumination in a dark place. In this embodiment, as the luminous layer 50, a layer that keeps emitting light for approximately one hour when illuminated with light of a general headlight from 5 cm away for one minute. The surfaces of the first transmissive polarizer 10 and the second transmissive polarizer 20 may be provided with UV-blocking films that block light in a wavelength band of about 400 nm or less to protect the liquid crystal and electronic elements from ultraviolet rays. Even in such a case, the light storage function of the luminous layer 50 acts with light that passes through the UV-blocking films, although the efficiency lowers. As the luminous material, any of various known luminous materials, such as strontium-aluminate-based powder particles, can be used. As the luminous layer 50, a layer having a composition in which the base material and the luminous material are mixed at a predetermined ratio can be used. The percentage of the luminous material in the luminous layer 50 may be equal to or greater than 30% and equal to or less than 70%. In this embodiment, as the luminous layer 50, a sheet-like layer having a composition in which silicone (elastic material) as the base material and the luminous material are mixed at 50% each is used. Alternatively, as the luminous layer 50, a resin sheet made of polyethylene terephthalate (PET) or the like with the luminous material printed may be used. In either configuration, the luminous layer 50 has optical transparency and transmits light of the backlight 70. Therefore, when the timepiece 100 is put in a dark place for a long period of time and the stored light in the luminous layer 50 runs out, the backlight 70 is turned on, so that display can be performed. In this embodiment, the thickness t1 of the luminous layer 50 is 0.22 mm. Therefore, the thickness t1 of the luminous layer 50 is less than the thickness t2 (0.33 mm), which is the sum of the thickness of the second transmissive polarizer 20 (0.21 mm) and the thickness of the reflective polarizer 30 (0.12 mm). The thickness of the luminous layer 50 is not limited to 0.22 mm, but may be changed as appropriate according to, for example, the brightness required. The luminous layer 50 of this embodiment is not bonded to either the reflective polarizer 30 or a light guide plate 72, which will be described later. The luminous layer 50 may be bonded to the reflective polarizer 30 and/or the light guide plate 72. The luminous layer 50 is not limited to the one formed to be sheet-like, but may be one printed on or applied to the lower surface of the reflective polarizer 30 or the upper surface of the light guide plate 72.

On the lower surface side of the luminous layer 50, namely, on a side of the luminous layer 50 opposite to the liquid-crystal-layer side, the backlight 70 (illumination device) that emits light toward the liquid crystal layer 63 is arranged. The backlight 70 includes a light source 71, such as a light emitting diode (LED), and the aforementioned light guide plate 72. The light guide plate 72 guides, of the light emitted from the light source 71, light having entered the inside through an end surface in the +Y direction shown in FIG. 2 and reflects part of the light in the +Z direction, thereby performing surface emission. Light emission and no-light emission of the light source 71 are controlled by a not-shown controller (processor) included in the timepiece 100.

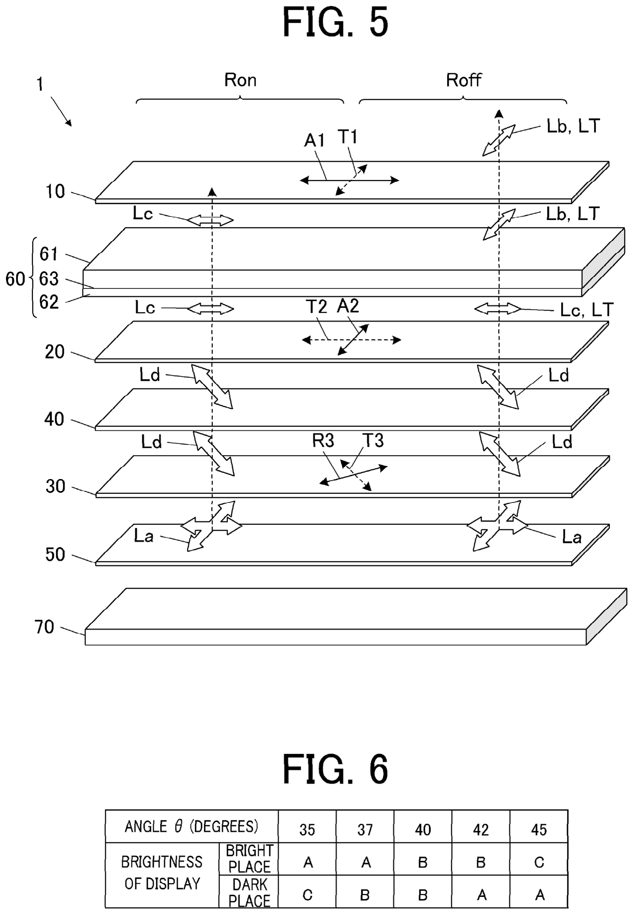

Next, the principle of display by the liquid crystal display device 1 will be described with reference to FIG. 4 and FIG. 5. In FIG. 4 and FIG. 5, for convenience of explanation, the components of the liquid crystal display device 1 are depicted in the form of being separate from one another. In FIG. 4 and FIG. 5, the first absorption axis A1, the second absorption axis A2 and the reflection axis R3 are represented by solid-line arrows, and the first transmission axis T1, the second transmission axis T2 and the third transmission axis T3 are represented by broken-line arrows. Open arrows represent polarization directions of light passing through the positions. FIG. 4 shows the principle of display in a reflection mode in which display is performed with reflected light of outside light, and FIG. 5 shows the principle of display in a transmission mode in which display is performed with light from/of the luminous layer 50 or the backlight 70. In FIG. 4 and FIG. 5, the state of light traveling in the liquid crystal display device 1 in each of an OFF region Roff that is a region with no drive voltage applied to the liquid crystal layer 63 and an ON region Ron that is a region with a drive voltage applied to the liquid crystal layer 63 is depicted. The ON region Ron is a region that is, as viewed in the Z direction, laid on segment electrodes (or pixel electrodes) with the drive voltage applied. The OFF region Roff is a region where the liquid crystal layer 63 spreads except the ON region Ron. In other words, the OFF region Roff includes a region that is, as viewed in the Z direction, laid on segment electrodes (or pixel electrodes) with no drive voltage applied, and a region where no segment electrodes (or pixel electrodes) is provided. The liquid crystal display device 1 of this embodiment performs display in a positive mode in which the OFF region Roff is bright (bright display, e.g., white), and the ON region Ron is dark (dark display, e.g., black). The positive mode is also called the normally white mode or positive simply. In the positive mode, the background region where neither segment electrode nor pixel electrode are provided is always bright, and parts corresponding to, among the segment electrodes and the pixel electrodes, segment electrodes and/or pixel electrodes with the drive voltage applied are selectively black, so that display of numbers, letters and/or the like is performed.

As shown in FIG. 4, in the reflection mode, light La (outside light) having random polarization directions is incident on the first transmissive polarizer 10 from the above. When this light La passes through the first transmissive polarizer 10, it becomes linearly polarized light Lb having a polarization direction parallel to the first transmission axis T1. As described above, in the ON region Ron, the liquid crystal layer 63 is not optically active, and therefore the linearly polarized light Lb incident on the liquid crystal panel 60 in the ON region Ron passes through the liquid crystal panel 60 as it is with the polarized state maintained. The polarization direction of this linearly polarized light Lb is parallel to the second absorption axis A2 of the second transmissive polarizer 20, and therefore the linearly polarized light Lb is absorbed by the second transmissive polarizer 20. Thus, in the ON region Ron, the outside light is not reflected but absorbed, so that the ON region Ron is dark. On the other hand, in the OFF region Roff, the liquid crystal layer 63 is optically active, and therefore the linearly polarized light Lb incident on the liquid crystal panel 60 in the OFF region Roff rotates 90 degrees in the polarization direction and passes through the liquid crystal panel 60 as linearly polarized light Lc. The polarization direction of this linearly polarized light Lc is parallel to the second transmission axis T2 of the second transmissive polarizer 20, and therefore the linearly polarized light Lc passes through the second transmissive polarizer 20 to be incident on the reflective polarizer 30. The polarization direction of the linearly polarized light Lc is not parallel to either the reflection axis R3 or the third transmission axis T3 of the reflective polarizer 30. Therefore, the linearly polarized light Lc incident on the reflective polarizer 30 is divided into linearly polarized light Ld that has a polarization direction parallel to the third transmission axis T3 and passes through the reflective polarizer 30 and linearly polarized light Le that has a polarization direction parallel to the reflection axis R3 and is reflected by the reflective polarizer 30. Of these, the linearly polarized light Ld that passes through the reflective polarizer 30 does not contribute to bright display in the reflection mode. On the other hand, the linearly polarized light Le that is reflected by the reflective polarizer 30 is incident on the second transmissive polarizer 20. Of the linearly polarized light Le incident on the second transmissive polarizer 20, linearly polarized light Lc' having a polarization direction parallel to the second transmission axis T2 of the second transmissive polarizer 20 passes through the second transmissive polarizer 20 to be incident on the liquid crystal panel 60. This linearly polarized light Lc' rotates 90 degrees in the polarization direction in the liquid crystal layer 63 and passes through the liquid crystal layer 63 as linearly polarized light Lb'. This linearly polarized light Lb' further passes through the first transmissive polarizer 10 and becomes visible to the user's eyes. Thus, in the OFF region Roff, part of the outside light is reflected and visible to the user's eyes, and therefore the OFF region Roff is bright.

As shown in FIG. 5, in the transmission mode, light La having random polarization directions emitted from the luminous layer 50 is incident on the reflective polarizer 30. In FIG. 5, the backlight 70 is off, but when the backlight 70 is on, the light La having random polarization directions is emitted from the backlight 70, passes through the luminous layer 50, and is incident on the reflective polarizer 30. In either case, of the light La incident on the reflective polarizer 30, linearly polarized light Ld having a polarization direction parallel to the third transmission axis T3 passes through the reflective polarizer 30 to be incident on the second transmissive polarizer 20. Of the linearly polarized light Ld incident on the second transmissive polarizer 20, linearly polarized light Lc having a polarization direction parallel to the second transmission axis T2 of the second transmissive polarizer 20 passes through the second transmissive polarizer 20 to be incident on the liquid crystal panel 60. The linearly polarized light Lc incident on the liquid crystal panel 60 in the ON region Ron passes through the liquid crystal panel 60 as it is with the polarized state maintained. The polarization direction of this linearly polarized light Lc is parallel to the first absorption axis A1 of the first transmissive polarizer 10, and therefore the linearly polarized light Lc is absorbed by the first transmissive polarizer 10. Thus, in the ON region Ron, the light from the luminous layer 50 (or backlight 70) is absorbed, so that the ON region Ron is dark. On the other hand, the linearly polarized light Lc incident on the liquid crystal panel 60 in the OFF region Roff rotates 90 degrees in the polarization direction in the liquid crystal layer 63 and passes through the liquid crystal panel 60 as linearly polarized light Lb. The polarization direction of this linearly polarized light Lb is parallel to the first transmission axis T1 of the first transmissive polarizer 10, and therefore the linearly polarized light Lb passes through the first transmissive polarizer 10 and becomes visible to the user's eyes. Thus, in the OFF region Roff, part of the light emitted from the luminous layer 50 (or backlight 70) passes through the first transmissive polarizer 10 and is visible to the user's eyes, and therefore the OFF region Roff is bright.

As described above, the reflection axis R3 and the third transmission axis T3 of the reflective polarizer 30 are both not parallel to either the second absorption axis A2 or the second transmission axis T2 of the second transmissive polarizer 20. In other words, the reflective polarizer 30 is arranged at an angle to transmit, to the luminous layer 50, part of the linearly polarized light Lc (shown in FIG. 4) incident on the reflective polarizer 30 from the second transmissive polarizer 20, and reflect other part of the linearly polarized light Lc toward the second transmissive polarizer 20. With such arrangement, in the reflection mode shown in FIG. 4, part of the linearly polarized light Le generated by the aforementioned dividing and reflected by the reflective polarizer 30 passes through the second transmissive polarizer 20, and this light (reflected display light LR), which has passed through the second transmitted polarizer 20, is used for bright display. On the other hand, in the transmission mode shown in FIG. 5, part of the linearly polarized light Ld having passed through the reflective polarizer 30 further passes through the second transmissive polarizer 20, and this light (transmitted display light LT), which has passed through the second transmissive polarizer 20, is used for bright display. Depending on the arrangement angle of the reflective polarizer 30, the ratio of the amount of the reflected display light LR to the amount of the outside light, which is hereinafter referred to as reflected light efficiency, is too low to obtain sufficient display brightness in a bright place, so that the visibility lowers. Also, depending on the arrangement angle of the reflective polarizer 30, the ratio of the amount of the transmitted display light LT to the amount of the light from the luminous layer 50 (or backlight 70), which is hereinafter referred to as transmitted light efficiency, is too low to obtain sufficient display brightness in a dark place, especially in a case where display is performed with only weak light of the luminous layer 50, so that the visibility lowers. The reflected light efficiency and the transmitted light efficiency are determined by the angle θ shown in FIG. 3 and have a trade-off relationship. The closer the angle θ is to 0 degrees, the higher the reflected light efficiency is and the lower the transmitted light efficiency is. When the angle θ is 0 degrees, all the linearly polarized light Le having been reflected by the reflective polarizer 30 in the reflection mode passes through the second transmissive polarizer 20, whereas all the linearly polarized light Ld having passed through the reflective polarizer 30 in the transmission mode is absorbed by the second transmissive polarizer 20. Further, the closer the angle θ is to 90 degrees, the lower the reflected light efficiency is and the higher the transmitted light efficiency is. When the angle θ is 90 degrees, all the linearly polarized light Le having been reflected by the reflective polarizer 30 in the reflection mode is absorbed by the second transmissive polarizer 20, whereas all the linearly polarized light Ld having passed through the reflective polarizer 30 in the transmission mode passes through the second transmissive polarizer 20. When the angle θ is within a certain range of angles between 0 degrees and 90 degrees, the reflected light efficiency sufficient to see display in the reflection mode in a bright place is obtained, and also the transmitted light efficiency sufficient to see display in the transmission mode using only the light of the luminous layer 50 in a dark place is obtained.

FIG. 6 shows evaluation results of the brightness of display in the reflection mode in a bright place and the brightness of display in the transmission mode in a dark place in a case where the angle θ is changed from 35 degrees through 45 degrees. In the transmission mode, the backlight 70 is off, and only the light of the luminous layer 50 is used. In the present disclosure, the bright place is an indoor space illuminated by a fluorescent light, and the dark place is a no-light-source space surrounded by a blackout curtain. The evaluation result A indicates that the brightness of the background by bright display is sufficient, and letters by dark display are clearly visible. The evaluation result B indicates that the brightness of the background by bright display is ensured to obtain contrast sufficient to see letters by dark display. The evaluation result C indicates that letters by dark display are difficult or impossible to see due to the background by bright display being dark. In order that display be visible regardless of the environment, it is required that evaluation results in the bright place and the dark place are both A or B. When the angle θ is 35 degrees, the evaluation result in the bright place is A, whereas the evaluation result in the dark place is C. When the angle θ is 45 degrees, the evaluation result in the bright place is C, whereas the evaluation result in the dark place is A. When the angle θ is one of 37 degrees, 40 degrees and 42 degrees, which are angles in the range of 35 degrees to 45 degrees exclusive, the evaluation results in the bright place and the dark place are both A or B. From these results, it is preferable that the angle θ be greater than 35 degrees and less than 45 degrees, and further preferable that the angle θ be equal to or greater than 37 degrees and equal to or less than 42 degrees.

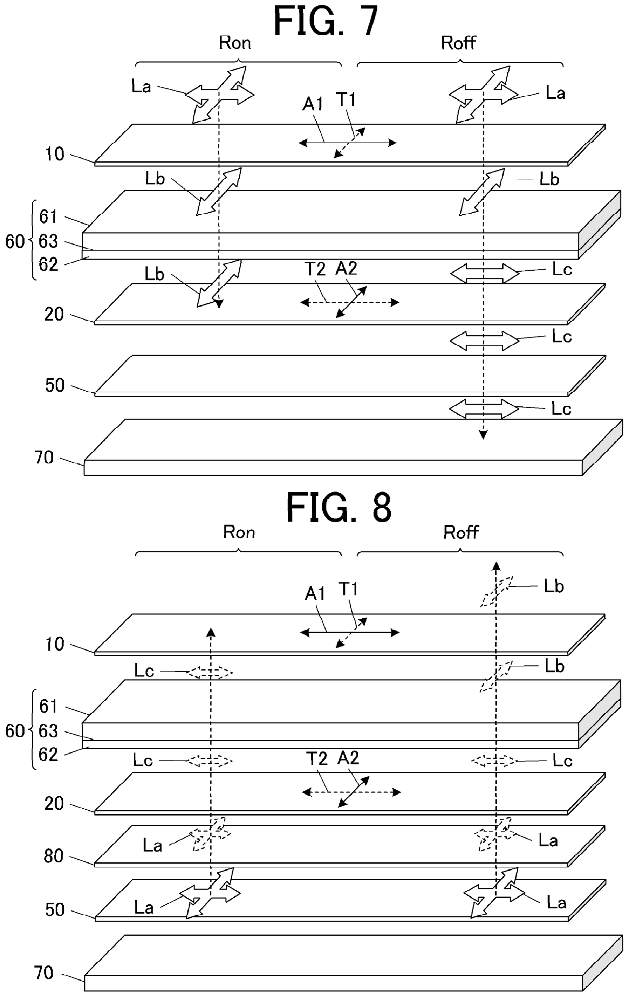

Next, comparative examples 1, 2 will be described with reference to FIG. 7 to FIG. 9. The comparative example 1 shown in FIG. 7 is configured by removing the reflective polarizer 30 and the adhesive layer 40 from the configuration of the embodiment shown in FIG. 4. In the configuration of the comparative example 1, the light emitted from the luminous layer 50 is all incident on the second transmissive polarizer 20 since it is not reflected by the reflective polarizer 30. As a result, in the transmission mode, bright display with sufficient brightness can be performed with only the light of the luminous layer 50. Therefore, even in the case where the backlight 70 is off and only the light of the luminous layer 50 is used in the dark place, sufficient visibility can be obtained as shown in the second row of the right column in FIG.

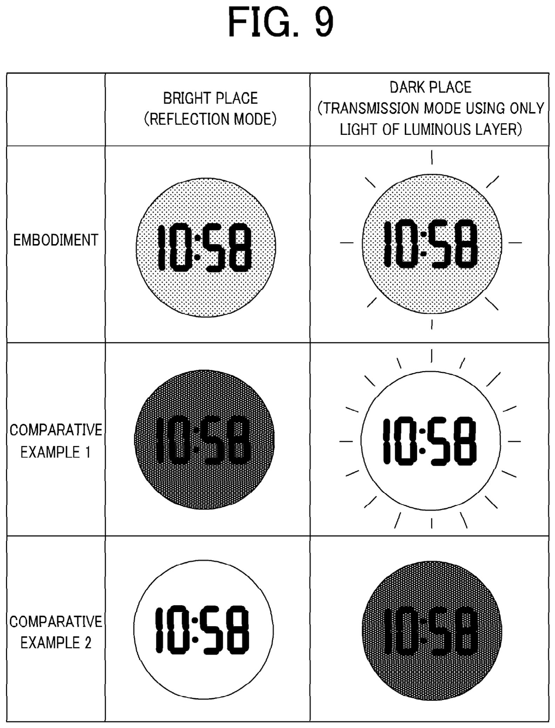

9. However, as shown in FIG. 7, in the reflection mode, since there is no layer to reflect the linearly polarized light Lc having passed through the second transmissive polarizer 20 upward, the brightness of bright display is insufficient. Therefore, as shown in the second row of the left column in FIG. 9, the comparative example 1 has a problem that sufficient visibility cannot be obtained in the bright place. Meanwhile, the comparative example 2 shown in FIG. 8 is configured by removing the reflective polarizer 30 and the adhesive layer 40 from the configuration of the embodiment shown in FIG. 4 and adding a semi-transmissive reflector 80 instead. This semi-transmissive reflector 80 has a thin metal film having a thickness adjusted to have a desired transmittance and does not have the polarization dividing function (polarization selection function), which the reflective polarizer 30 has. The transmittance of this semi-transmissive reflector 80 is usually kept as low as possible within a range in which display in the transmission mode using the light of the backlight 70 is visible. In the configuration of the comparative example 2, in the reflection mode, the linearly polarized light Lc having passed through the second transmissive polarizer 20 can be reflected upward at high efficiency by the semi-transmissive reflector 80. As a result, bright display with sufficient brightness can be performed. Therefore, as shown in the third row of the left column in FIG. 9, the comparative example 2 can provide sufficient visibility in the bright place. However, as shown in FIG. 8, in the configuration of the comparative example 2, in the transmission mode, most of the light emitted from the luminous layer 50 is blocked by the semi-transmissive reflector 80, and the brightness of bright display is insufficient accordingly. Therefore, in the case where the backlight 70 is off and only the light of the luminous layer 50 is used in the dark place, as shown in the third row of the right column in FIG. 9, the comparative example 2 has a problem that sufficient visibility cannot be obtained. In contrast to these comparative examples 1, 2, in the configuration of the embodiment, the arrangement angle of the reflective polarizer 30 is adjusted as appropriate, so that as shown in the first row in FIG. 9, sufficient visibility can be obtained in both the bright place and the dark place.

As described above, the liquid crystal display device 1 of this embodiment includes the first transmissive polarizer 10, the second transmissive polarizer 20, the liquid crystal layer 63 disposed between the first transmissive polarizer 10 and the second transmissive polarizer 20, the reflective polarizer 30 disposed on the side of the second transmissive polarizer 20 opposite to the liquid-crystal-layer side, which is closer to the liquid crystal layer 63, and the luminous layer 50 disposed on the side of the reflective polarizer 30 opposite to the liquid-crystal-layer side. The reflection axis R3 of the reflective polarizer 30 is not parallel to either the second absorption axis A2 or the second transmission axis T2 of the second transmissive polarizer 20 as viewed in the direction perpendicular to the second transmissive polarizer 20.

According to the liquid crystal display device 1 of this embodiment, since the reflection axis R3 of the reflective polarizer 30 and the second transmission axis T2 of the second transmissive polarizer 20 are not parallel, part of the outside light reflected upward by the reflective polarizer 30 in the reflection mode passes through the second transmissive polarizer 20 and becomes the reflected display light LR. Therefore, in the bright place, display in the reflection mode can be performed with this reflected display light LR. Further, since the third transmission axis T3 of the reflective polarizer 30 and the second absorption axis A2 of the second transmissive polarizer 20 are not parallel, part of the light having been emitted from the luminous layer 50 and passed through the reflective polarizer 30 in the transmission mode passes through the second transmissive polarizer 20 and becomes the transmitted display light LT. Therefore, in the dark place, display in the transmission mode can be performed with this transmitted display light LT. Thus, the liquid crystal display device 1 of this embodiment can obtain sufficient visibility in both the bright place and the dark place while using the luminous layer 50. The use of the luminous layer 50 makes display in the dark place visible without turning on the backlight 70. This can reduce power consumption of the timepiece 100. Further, it is no longer necessary to operate a button to turn on the backlight 70 or to tilt the arm on which the timepiece 100 is worn to have the tilt detected by a tilt sensor. Therefore, display can be easily checked in the dark place. Further, when a nighttime activity, such as night hiking or astronomical observation, is performed, for example, light of a headlight is emitted to the timepiece 100 from 5 cm away for one minute. This makes it possible to continue display with the luminous layer 50 for a period of about one hour thereafter. Thus, convenience as an outdoor timepiece can be enhanced.

Further, the angle θ formed by the second transmission axis T2 of the second transmissive polarizer 20 and the reflection axis R3 of the reflective polarizer 30 is greater than 35 degrees and less than 45 degrees as viewed in the direction perpendicular to the second transmissive polarizer 20. This can provide the reflected light efficiency sufficient to see display in the reflection mode in the bright place and the transmitted light efficiency sufficient to see display in the transmission mode using only the light of the luminous layer 50 in the dark place.

Further, the thickness t1 of the luminous layer 50 is less than the total thickness t2 of the thickness of the second transmissive polarizer 20 and the thickness of the reflective polarizer 30. This can reduce the overall thickness of the liquid crystal display device 1 having the configuration in which the second transmissive polarizer 20 and the reflective polarizer 30 are provided.

Further, the reflective polarizer 30 is bonded to the second transmissive polarizer 20 via the adhesive layer 40 that diffuses light. This can reduce regular reflection in the reflection mode and achieve glare-free display.

Further, the luminous layer 50 has the composition in which the base material and the luminous material having the light storage function are mixed at a predetermined ratio. This can make the luminous layer 50 less likely to be warped compared to the configuration in which a luminous material is printed on a transparent base material.

Further, the base material to be used is an elastic member, for example, a high-elastic member, such as silicone. This enables the luminous layer 50 to absorb shocks applied to the timepiece 100, and accordingly can prevent or reduce problems, such as malfunction of circuit elements or the like due to the shocks, and enhance the shock resistance of the timepiece 100.

Further, the backlight 70 that emits light toward the liquid crystal layer 63 is disposed on the side of the luminous layer 50 opposite to the liquid-crystal-layer side. Therefore, in the state in which the stored light in the luminous layer 50 has run out (no-light-emission state), display in the transmission mode can be performed by the backlight 70 being turned on. Further, the light storage function of the luminous layer 50 can be activated by the backlight 70 emitting light to the luminous layer 50.

Further, the timepiece 100 of this embodiment includes the liquid crystal display device 1 described above, and thus can obtain sufficient visibility in both the bright place and the dark place while using the luminous layer 50.

The present disclosure is not limited to the above embodiment, but can be modified in a variety of aspects. For example, the liquid crystal display device 1 may perform display in a negative mode in which the OFF region Roff is dark, and the ON region Ron is bright. The negative mode is also called the normally black mode or negative simply. For the negative mode, the first absorption axis A1 and the first transmission axis T1 shown in FIG. 3 are rotated 90 degrees so that the first absorption axis A1 of the first transmissive polarizer 10 and the second absorption axis A2 of the second transmissive polarizer 20 are parallel.

Further, since the light storage function of the luminous layer 50 works to some extent with the light of the backlight 70, in the state in which the backlight 70 is on, the combined light of the light of the backlight 70 and the light of the luminous layer 50 contributes to display. Therefore, the brightness of the backlight 70 may be reduced by the amount of the brightness due to the light of the luminous layer 50. Further, the backlight 70 may be omitted since the luminous layer 50 being provided can make display visible even in the dark place.

Further, the orientation control method of the liquid crystal molecules in the liquid crystal layer 63 is not limited to the TN method, but may be the super-twisted nematic (STN) method, the vertical alignment (VA) method, the in-plane switching (IPS) method, or the like.

Further, the application of the liquid crystal display device 1 is not limited to the timepiece 100. The liquid crystal display device 1 can be used by being provided in an electronic device having a display unit, such as an electronic desktop calculator, an electronic dictionary or a handy terminal.

Further, it is a matter of course that the detailed configuration and detailed operation of each component of the timepiece 100 and the liquid crystal display device 1 of the above embodiment can be changed as appropriate without departing from the scope of the present disclosure. Although one or more embodiments of the present disclosure have been described above, the scope of the present disclosure is not limited to the embodiments described above, but includes the scope of claims and their equivalents.

## Claims

1. A liquid crystal display device (1) comprising:
a first transmissive polarizer (10);
a second transmissive polarizer (20);
a liquid crystal layer (63) disposed between the first transmissive polarizer (10) and the second transmissive polarizer (20);
a reflective polarizer (30) disposed on a side of the second transmissive polarizer (20) opposite to a liquid-crystal-layer side closer to the liquid crystal layer (63); and
a luminous layer (50) disposed on a side of the reflective polarizer (30) opposite to the liquid-crystal-layer side,
wherein a reflection axis (R3) of the reflective polarizer (30) is not parallel to either an absorption axis (A2) or a transmission axis (T2) of the second transmissive polarizer (20) as viewed in a direction (Z) perpendicular to the second transmissive polarizer (20).

2. The liquid crystal display device (1) according to claim 1, wherein an angle (θ) formed by the transmission axis (T2) of the second transmissive polarizer (20) and the reflection axis (R3) of the reflective polarizer (30) is greater than 35 degrees and less than 45 degrees as viewed in the direction (Z) perpendicular to the second transmissive polarizer (20).

3. The liquid crystal display device (1) according to claim 1 or 2, wherein a thickness (t1) of the luminous layer (50) is less than a sum (t2) of a thickness of the second transmissive polarizer (20) and a thickness of the reflective polarizer (30).

4. The liquid crystal display device (1) according to any one of claims 1 to 3, wherein the reflective polarizer (30) is bonded to the second transmissive polarizer (20) via an adhesive layer (40) that diffuses light.

5. The liquid crystal display device (1) according to any one of claims 1 to 4, wherein the luminous layer (50) has a composition in which a base material and a luminous material having a light storage function are mixed at a predetermined ratio.

6. The liquid crystal display device (1) according to claim 5, wherein the base material is an elastic member.

7. The liquid crystal display device (1) according to any one of claims 1 to 6, further comprising an illumination device (70) that is disposed on a side of the luminous layer (50) opposite to the liquid-crystal-layer side and emits light toward the liquid crystal layer (63).

8. The liquid crystal display device (1) according to any one of claims 1 to 7, an orientation control method of liquid crystal molecules in the liquid crystal layer (63) is a twisted nematic method.

9. The liquid crystal display device (1) according to any one of claims 1 to 8, wherein the liquid crystal display device (1) performs display in a positive mode in which an off region (Roff) with no drive voltage applied is bright, and an on region (Ron) with a drive voltage applied is dark.

10. The liquid crystal display device (1) according to any one of claims 1 to 9, further comprising a pair of a first glass substrate (61) on a side closer to the first transmissive polarizer (10) and a second glass substrate (62) on a side closer to the second transmissive polarizer (20) between which the liquid crystal layer (63) is sandwiched,
wherein a thickness of the second glass substrate (62) is less than a thickness of the first glass substrate (61).

11. The liquid crystal display device (1) according to claim 2, wherein the angle (θ) formed by the transmission axis (T2) of the second transmissive polarizer (20) and the reflection axis (R3) of the reflective polarizer (30) is equal to or greater than 37 degrees and equal to or less than 42 degrees as viewed in the direction (Z) perpendicular to the second transmissive polarizer (20).

12. The liquid crystal display (1) device according to claim 5, wherein in the luminous layer (50), of a total mass of the base material and the luminous material, the luminous material is equal to or greater than 30% and equal to or less than 70%.

13. A timepiece (100) comprising the liquid crystal display device (1) according to any one of claims 1 to 12.
